# EUROPEAN PATENT APPLICATION

(11) **EP 4 451 780 A1**
(43) Date of publication of application: **23.10.2024**
(21) Application number: 24170690.2
(22) Date of filing: 17.04.2024
(51) Int. Cl.: H04W 72/1268, H04W 72/21, H04W 72/23, H04W 72/115, H04L 5/00

(54) **METHOD AND APPARATUS OF CONTROLLING UPLINK TRANSMISSION IN WIRELESS COMMUNICATION SYSTEM**

(30) Priority: 20.04.2023 KR 20230051950; 19.12.2023 KR 20230185774
(71) Applicant: KT Corporation, Seongnam-si, Gyeonggi-do 13606 (KR)
(72) Inventor: PARK, Ki-Hyeon, Seongnam-si, Gyeonggi-do 13606 (KR); PARK, Kyujin, Seongnam-si, Gyeonggi-do 13606 (KR)
(74) Representative: BCKIP Part mbB

(57) **Abstract**

Provided are a method and apparatus for controlling uplink transmission in a wireless communication system. A base station may configure and transmit information on one configured grant (CG)-physical uplink shared channel (PUSCH) configuration information including multiple transmission occasions to a terminal. The terminal may perform the one CG-PUSCH configuration, configure uplink control information (UCI) for indicating an unused transmission occasion of the one CG-PUSCH configuration, and transmit the UCI for indicating the unused transmission occasion of the one CG-PUSCH configuration to the base station. The UCI for indicating the unused transmission occasion is configured regarding whether to include the UCI in at least one of the multiple transmission occasions of the one CG-PUSCH configuration and based on an indication from a base station.

## Description

### CROSS-REFERENCE TO RELATED THE APPLICATION

This application is based on and claims priority to Patent Application No. 10-2023-0051950 filed on Apr. 20, 2023 and No. 10-2023-0185774 filed on Dec. 19, 2023 in the Korean Intellectual Property Office.

### BACKGROUND

### Technical Field

The present disclosure relates to a 5^{th} generation new radio (5G NR) system based on a 3^{rd} generation partnership project.

### Description of the Related Art

With the increase in the number of communication devices, there is a consequent rise in communication traffic that needs to be managed. To handle this increased communication traffic, a next generation 5G system, which is an enhanced mobile broadband communication system compared to the exiting LTE system, has become necessary. Such a next generation 5G system has been developed based on scenarios which are classified into Enhanced Mobile BroadBand (eMBB), Ultra-reliability and low-latency communication (URLLC), Massive Machine-Type Communications (mMTC), and the like.

eMBB, URLLC, and mMTC represent next generation mobile communication scenarios. eMBB is characterized by high spectrum efficiency, high user experienced data rate, high peak data. URLLC is characterized by ultra-reliable, ultra-low latency, ultra-high availability (e.g., vehicle-to-everything (V2X), Emergency Service, Remote Control). mMTC is characterized by low cost, low energy, short packet, and massive connectivity (e.g., Internet of Things (IoT)).

### SUMMARY

The present disclosure is directed to providing a method and apparatus for controlling uplink transmission in a wireless communication system. In particular, the present disclosure aims to provide a method of controlling uplink transmission when multiple configured grant (CG)-physical uplink shared channel (PUSCH) transmissions are configured, that is, when multiple transmission occasions are configured.

According to an aspect of the present disclosure, there is provided a method of a terminal for operating in a wireless communication system. The method may include: performing one CG-PUSCH configuration including multiple transmission occasions; and configuring uplink control information (UCI) for indicating an unused transmission occasion of the one CG-PUSCH configuration, wherein the configuring of the UCI i) includes configuring regarding whether to include the UCI in at least one of the multiple transmission occasions of the one CG-PUSCH configuration, and ii) is based on an indication from a base station.

According to another aspect of the present disclosure, there is provided a method of a base station for operating in a wireless communication system. The method may include: performing one CG-PUSCH configuration including multiple transmission occasions on a terminal; and based on a configuration of UCI for indicating an unused transmission occasion of the one CG-PUSCH configuration, receiving the UCI from the terminal, wherein the configuration of the UCI i) includes configuring regarding whether to include the UCI in at least one of the multiple transmission occasions of the one CG-PUSCH configuration, and ii) is based on an indication from the base station.

According to further another aspect of the present disclosure, there is provided a communication device for a wireless communication system. The communication device may include: at least one processor; and at least one memory storing instructions and operably and electrically connected to the at least one processor, the instructions that, when executed by the at least one processor, cause the communication device to perform operations of: performing one CG-PUSCH configuration including multiple transmission occasions; and configuring UCI for indicating an unused transmission occasion of the one CG-PUSCH configuration, wherein the configuring of the UCI i) includes configuring regarding whether to include the UCI in at least one of the multiple transmission occasions of the one CG-PUSCH configuration, and ii) is based on an indication from a base station.

According to still another aspect of the present disclosure, there is provided a base station for a wireless communication system. The base station may include: at least one processor; and at least one memory storing instructions and operably and electrically connected to the at least one processor, wherein the instructions that, when executed by the at least one processor, cause the base station to perform operations of: performing one CG-PUSCH configuration including multiple transmission occasions on a terminal; and based on a configuration of UCI for indicating an unused transmission occasion of the one CG-PUSCH configuration, receiving the UCI from the terminal, and the configuration of the UCI i) includes configuring regarding whether to include the UCI in at least one of the multiple transmission occasions of the one CG-PUSCH configuration, and ii) is based on an indication from the base station.

The multiple transmission occasions may be included in one period. The indication from the base station may be received by the terminal through radio resource control (RRC) signaling.

The UCI for indicating the unused transmission occasion may include bitmap information, and the unused transmission occasion and a used transmission occasion may be indicated through the bitmap information. A size of the bitmap information may correspond to transmission occasions including the unused transmission occasion and the used transmission occasion.

In addition, the transmission occasions including the unused transmission occasion and the used transmission occasion may constitute the multiple transmission occasions included in the one CG-PUSCH configuration.

### RIEF DESCRIPTION OF THE DRAWINGS

FIG. 1 is a diagram illustrating a wireless communication system.
FIG. 2 is a diagram illustrating a structure of a radio frame used in new radio (NR).
FIGS. 3A to 3C illustrate exemplary architectures for a wireless communication service.
FIG. 4 illustrates a slot structure of an NR frame.
FIG. 5 shows an example of a subframe type in NR.
FIG. 6 illustrates a structure of a self-contained slot.
FIG. 7 illustrates exemplary uplink transmission and reception based on a configured grant (CG).
FIG. 8 illustrates exemplary uplink transmission and reception based on a CG according to the disclosure of the present specification.
FIG. 9 is a flowchart for an operation method of a terminal according to an embodiment of the disclosure.
FIG. 10 is a flowchart for an operation method of a base station according to an embodiment of the disclosure.
FIG. 11 is a block diagram illustrating apparatuses according to an embodiment of the disclosure.
FIG. 12 is a block diagram showing a terminal according to an embodiment of the disclosure.
FIG. 13 is a block diagram of a processor in accordance with an embodiment.
FIG. 14 is a detailed block diagram of a transceiver of a first apparatus shown in FIG. 11 or a transceiving unit of an apparatus shown in FIG. 12.

### DETAILED DESCRIPTION

The technical terms used in this document are for merely describing specific embodiments and should not be considered limiting the embodiments of disclosure. Unless defined otherwise, the technical terms used in this document should be interpreted as commonly understood by those skilled in the art but not too broadly or too narrowly. If any technical terms used here do not precisely convey the intended meaning of the disclosure, they should be replaced with or interpreted as technical terms that accurately understood by those skilled in the art. The general terms used in this document should be interpreted according to their dictionary definitions, without overly narrow interpretations.

The singular form used in the disclosure includes the plural unless the context dictates otherwise. The term 'include' or 'have' may represent the presence of features, numbers, steps, operations, components, parts or the combination thereof described in the disclosure. The term 'include' or 'have' may not exclude the presence or addition of another feature, another number, another step, another operation, another component, another part or the combination thereof.

The terms 'first' and 'second' are used to describe various components without limiting them to these specific terms. The terms 'first' and 'second' are only used to distinguish one component from another component. For example, a first component may be named as a second component without departing from the scope of the disclosure.

When an element or layer is referred to as being "connected to" or "coupled to" another element or layer, it may be directly connected or coupled to the other element or layer, there might be intervening elements or layers. In contrast, when an element or layer is referred to as being "directly connected to" or "directly coupled to" another element or layer, there are no intervening elements or layers.

Hereinafter, the exemplary embodiments of the disclosure will be described in detail with reference to the accompanying drawings. In describing the disclosure, for ease of understanding, the same reference numerals will be used throughout the drawings for the same components, and repetitive description on these components will be omitted. Detailed description on well-known arts that may obscure the essence of the disclosure will be omitted. The accompanying drawings are provided to merely facilitate understanding of the embodiment of disclosure and should not be seen as limiting. It should be recognized that the essence of this disclosure extends the illustrations, encompassing, replacements or equivalents in variations of what is shown in the drawings.

In this disclosure, "A or B" may mean "only A", "only B", or "both A and B". In other words, "A or B" in the disclosure may be interpreted as "A and/or B". For example, "A, B or C" may mean "only A", "only B", "only C", or "any combination of A, B and C".

In this disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In this disclosure, "at least one of A and B" may mean "only A", "only B" or "both A and B". In addition, "at least one of A or B" or "at least one of A and/or B" may be interpreted as the same as "at least one of A and B".

In addition, "at least one of A, B and C" may mean "only A", "only B", "only C", or "any combination of A, B and C". Further, "at least one of A, B or C" or "at least one of A, B and/or C" may mean "at least one of A, B and C".

Also, parentheses used in this disclosure may mean "for example". For example, "control information (PDCCH)" may mean that "PDCCH" is an example of "control information". However, "control information" in this disclosure is not limited to "PDCCH". As another example, "control information (i.e., PDCCH)", may also mean that "PDCCH" is an example of "control information".

Each of the technical features described in one drawing in this disclosure may be implemented independently or simultaneously.

In the accompanying drawings, user equipment (UE) is illustrated as an example and may be referred to as a terminal, mobile equipment (ME), and the like. UE may be a portable device such as a laptop computer, a mobile phone, a personal digital assistance (PDA), a smart phone, a multimedia device, or the like. UE may be a non-portable device such as a personal computer (PC) or a vehicle-mounted device.

Hereinafter, the UE may be as an example of a device capable of wireless communication. The UE may be referred to as a wireless communication device, a wireless device, or a wireless apparatus. The operation performed by the UE may be applicable to any device capable of wireless communication. A device capable of wireless communication may also be referred to as a radio communication device, a wireless device, or a wireless apparatus.

A base station generally refers to a fixed station that communicates with a wireless device. The base station may include an evolved-NodeB (eNodeB), an evolved-NodeB (eNB), a BTS (Base Transceiver System), an access point (Access Point), gNB (Next generation NodeB), RRH(remote radio head), TP(transmission point), RP(reception point), and the repeater(relay).

While embodiments of the disclosure are described based on an long term evolution (LTE) system, an LTE-advanced (LTE-A) system, and an new radio (NR) system, such embodiments may be applicable to any communication system that fits the described criteria.

### <Wireless Communication System>

With the success of long-term evolution (LTE)/LTE-A (LTE-Advanced) for the 4th generation mobile communication, the next generation mobile communication (e.g., 5^{th} generation: also known as 5G mobile communication) has been commercialized and the follow-up studies are also ongoing.

The 5^{th} generation mobile communications, as defined by the International Telecommunication Union (ITU), provide a data transmission rate of up to 20 Gbps and a minimum actual transmission rate of at least 100 Mbps anywhere. The official name of the 5^{th} generation mobile telecommunications is 'IMT-2020'.

ITU proposes three usage scenarios: enhanced Mobile Broadband (eMBB), massive Machine Type Communication (mMTC) and Ultra Reliable and Low Latency Communications (URLLC).

URLLC is a usage scenario requiring high reliability and low latency. For example, services such as automatic driving, factory automation, augmented reality require high reliability and low latency (e.g., a delay time of less than 1 ms). The delay time of current 4G (e.g., LTE) is statistically about 21 to 43 ms (best 10%) and about 33 to 75 ms (median), which insufficient to support services requiring a delay time of about 1 ms or less. Meanwhile, eMBB is a usage scenario that requires mobile ultra-wideband.

That is, the 5G mobile communication system offers a higher capacity compared to current 4G LTE. The 5G mobile communication system may be designed to increase the density of mobile broadband users and support device to device (D2D), high stability, and machine type communication (MTC). 5G research and development focus on achieving lower latency times and lower battery consumption compared to 4G mobile communication systems, enhancing the implementation of the Internet of things (IoTs). A new radio access technology, known as new RAT or NR, may be introduced for such 5G mobile communication.

An NR frequency band is defined to include two frequency ranges FR1 and FR2. Table 1 below shows an example of the two frequency ranges FR1 and FR2. However, the numerical values associated with each frequency range may be subject to change, and the embodiments are not limited thereto. For convenience of description, FR1 in the NR system may refer to a Sub-6 GHz range, and FR2 may refer to an above-6 GHz range, which may be called millimeter waves (mmWs).

**[Table 1]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

The numerical values of the frequency ranges may be subject to change in the NR system. For example, FR1 may range from about 410 MHz to 7125 MHz as listed in [Table 1]. That is, FR1 may include a frequency band of 6 GHz (or 5850, 5900, and 5925 MHz) or higher. For example, the frequency band of 6 GHz (or 5850, 5900, and 5925 MHz) or higher may include an unlicensed band. The unlicensed band may be used for various purposes, for example, vehicle communication (e.g., autonomous driving).

The 3GPP communication standards define downlink (DL) physical channels and DL physical signals. DL physical channels are related to resource elements (REs) that convey information from a higher layer while DL physical signals, used in the physical layer, correspond to REs that do not carry information from a higher layer. For example, DL physical channels include physical downlink shared channel (PDSCH), physical broadcast channel (PBCH), physical multicast channel (PMCH), physical control format indicator channel (PCFICH), physical downlink control channel (PDCCH), and physical hybrid ARQ indicator channel (PHICH). DL physical signals include reference signals (RSs) and synchronization signals (SSs). A reference signal (RS) is also known as a pilot signal and has a predefined special waveform known to both a gNode B (gNB) and a UE. For example, DL RSs include cell specific RS, UE-specific RS (UE-RS), positioning RS (PRS), and channel state information RS (CSI-RS). The 3GPP LTE/LTE-A standards also define uplink (UL) physical channels and UL physical signals. UL channels correspond to REs with information from a higher layer. UL physical signals are used in the physical layer and correspond to REs which do not carry information from a higher layer. For example, UL physical channels include physical uplink shared channel (PUSCH), physical uplink control channel (PUCCH), and physical random access channel (PRACH). UL physical signals include a demodulation reference signal (DMRS) for a UL control/data signal, and a sounding reference signal (SRS) used for UL channel measurement.

In this disclosure, PDCCH/PCFICH/PHICH/PDSCH refers to a set of time-frequency resources or a set of REs carrying downlink control information (DCI)/a control format indicator (CFI)/a DL acknowledgement/negative acknowledgement (ACK/NACK)/DL data. Further, PUCCH/PUSCH/PRACH refers to a set of time-frequency resources or a set of REs carrying UL control information (UCI)/UL data/a random access signal.

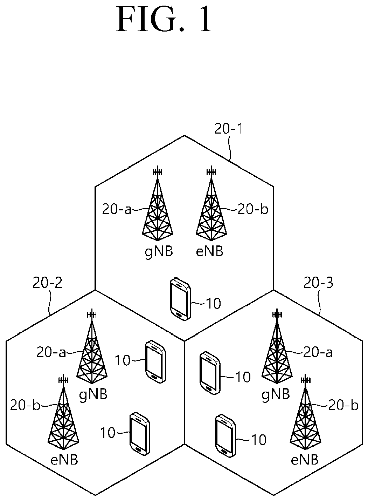

**FIG. 1** **is a diagram illustrating a wireless communication system.**

Referring to FIG. 1, the wireless communication system may include at least one base station (BS). For example, the BSs may include a gNodeB (or gNB) 20a and an eNodeB (or eNB) 20b. The gNB 20a supports 5G mobile communication. The eNB 20b supports 4G mobile communication, that is, long term evolution (LTE).

Each BS 20a and 20b provides a communication service for a specific geographic area (commonly referred to as a cell) (20-1, 20-2, 20-3). The cell may also be divided into a plurality of areas (referred to as sectors).

A user equipment (UE) typically belongs to one cell, and the cell to which the UE belongs is called a serving cell. A base station providing a communication service to a serving cell is referred to as a serving base station (serving BS). Since the wireless communication system is a cellular system, there are other cells adjacent to the serving cell. The other cell adjacent to the serving cell is referred to as a neighbor cell. A base station that provides a communication service to a neighboring cell is referred to as a neighbor BS. The serving cell and the neighboring cell are relatively determined based on the UE.

Hereinafter, downlink means communication from the base station 20 to the UE 10, and uplink means communication from the UE 10 to the base station 20. In the downlink, a transmitter may be a part of the base station 20, and a receiver may be a part of the UE 10. In the uplink, the transmitter may be a part of the UE 10, and the receiver may be a part of the base station 20.

In a wireless communication system, there are primarily two schemes: frequency division duplex (FDD) scheme and time division duplex (TDD) scheme. In the FDD scheme, uplink transmission and downlink transmission occur on different frequency bands. Conversely, the TDD scheme allows both uplink transmission and downlink transmission to use the same frequency band, but at different times. A key characteristic of the TDD scheme is the substantial reciprocity of the channel response, meaning that the downlink channel response and the uplink channel response are almost identical within a given frequency domain. This reciprocity in TDD-based radio communication systems enables the estimation of the downlink channel response from the uplink channel response. In the TDD scheme, since uplink transmission and downlink transmission are time-divided in the entire frequency band, it is not possible to simultaneously perform downlink transmission by the base station and uplink transmission by the UE. In a TDD system where uplink transmission and downlink transmission are divided into subframe units, uplink transmission and downlink transmission are performed in different subframes.

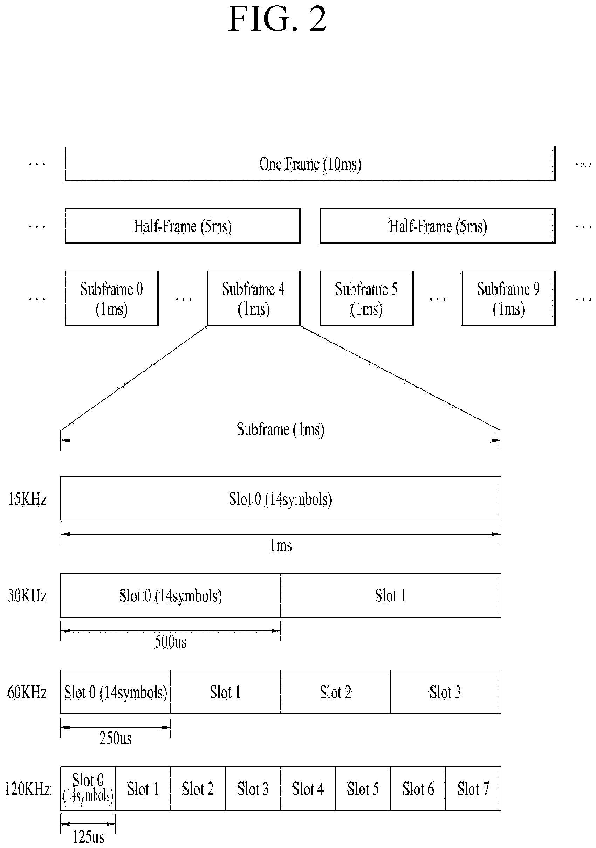

**FIG. 2** **is a diagram illustrating a structure of a radio frame used in NR.**

In NR, UL and DL transmissions are configured in frames. Each radio frame has a length of 10 ms and is divided into two 5-ms half frames (HFs). Each half frame is divided into five 1-ms subframes. A subframe is divided into one or more slots, and the number of slots in a subframe depends on the subcarrier spacing (SCS). Each slot includes 12 or 14 OFDM(A) symbols according to a Cyclic Prefix (CP). With a normal CP, a slot includes 14 OFDM symbols. With an extended CP, a slot includes 12 OFDM symbols. A symbol may include an OFDM symbol (CP-OFDM symbol) and an SC-FDMA symbol (or DFT-s-OFDM symbol).

### <Support of Various Numerologies>

As wireless communication technology advances, the NR system may offer various numerologies to terminals. For example, when a subcarrier spacing (SCS) is set at 15 kHz, it supports a broad range of the typical cellular bands. When a subcarrier spacing (SCS) is set at 30 kHz/60 kHz, it supports a dense-urban, lower latency, wider carrier bandwidth. When the SCS is 60 kHz or higher, it supports a bandwidth greater than 24.25 GHz in order to overcome phase noise.

These numerologies may be defined by the cyclic prefix (CP) length and the SCS. A single cell in the NR system is capable of providing multiple numerologies to terminals. Table 2 below shows the relationship between the subcarrier spacing, corresponding CP length, and the index of a numerology (represented by µ).

**[Table 2]**

| µ | Δf=2^{µ}·15 [kHz] | CP |
|---|---|---|
| 0 | 15 | normal |
| 1 | 30 | normal |
| 2 | 60 | normal, extended |
| 3 | 120 | normal |
| 4 | 240 | normal |
| 5 | 480 | normal |
| 6 | 960 | normal |

Table 3 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) according to each numerology expressed by µ in the case of a normal CP.

**[Table 3]**

| µ | Δf=2^{µ}·15 [kHz] | N^{slot}_{symb} | N^{frame,µ}ₛₗₒₜ | N^{subframe,µ}ₛₗₒₜ |
|---|---|---|---|---|
| 0 | 15 | 14 | 10 | 1 |
| 1 | 30 | 14 | 20 | 2 |
| 2 | 60 | 14 | 40 | 4 |
| 3 | 120 | 14 | 80 | 8 |
| 4 | 240 | 14 | 160 | 16 |
| 5 | 480 | 14 | 320 | 32 |
| 6 | 960 | 14 | 640 | 64 |

Table 4 below shows the number of OFDM symbols per slot (N^{slot}_{symb}), the number of slots per frame (N^{frame,µ}ₛₗₒₜ), and the number of slots per subframe (N^{subframe,µ}ₛₗₒₜ) of a numerology represented by µ in the case of an extended CP.

**[Table 4]**

| µ | SCS (15*2^{µ}) | N^{slot}_{symb} | N^{frame,µ}ₛₗₒₜ | N^{subframe,µ}ₛₗₒₜ |
|---|---|---|---|---|
| 2 | 60KHz (u=2) | 12 | 40 | 4 |

In the NR system, OFDM(A) numerologies (e.g., SCS, CP length, and so on) may be configured differently across multiple cells that are integrated with a single terminal. Accordingly, the duration of time resource may vary among these integrated cells. Here, the duration may be referred to as a section. The time resource may include a subframe, a slot or a transmission time interval (TTI). Further, the time resource may be collectively referred to as a time unit (TU) for simplicity and include the same number of symbols.

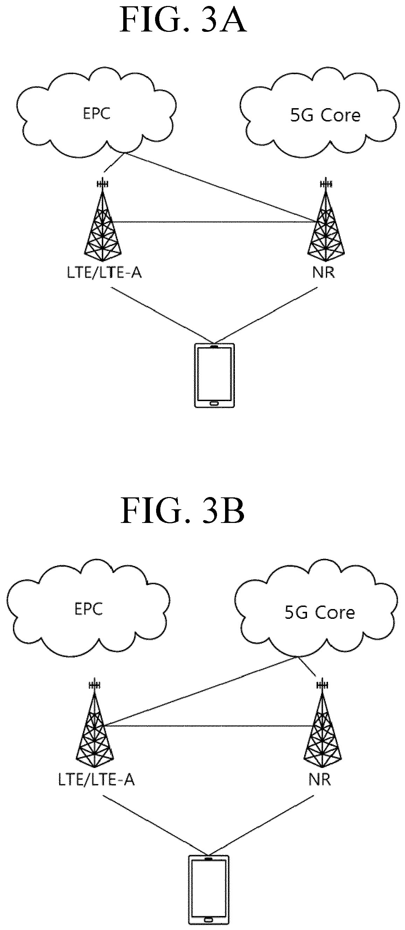

**FIGS. 3A to 3C** **illustrate exemplary architectures for a wireless communication service.**

Referring to FIG. 3A, a UE is connected in dual connectivity (DC) with an LTE/LTE-A cell and a NR cell.

The NR cell is connected with a core network for the legacy fourth-generation mobile communication, that is, Evolved Packet core (EPC).

Referring to FIG. 3B, the LTE/LTE-A cell is connected with a core network for 5th generation mobile communication, that is, a 5G core network.

A service provided by the architecture shown in FIGS. 3A and 3B is referred to as a non-standalone (NSA) service.

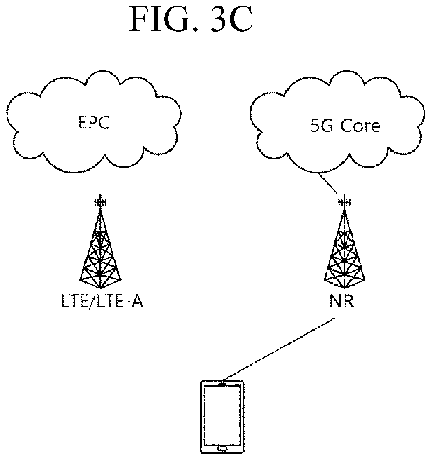

Referring to FIG. 3C, a UE is connected only with an NR cell. A service provided by this architecture is referred to as a standalone (SA) service.

In the new radio access technology (NR), the use of a downlink subframe for reception from a base station and an uplink subframe for transmission to the base station may be employed. This method may be applicable to both paired spectrums and unpaired spectrums. Paired spectrums involve two subcarriers designated for downlink and uplink operations. For example, one subcarrier within a pair of spectrums may include a pair of a downlink band and an uplink band.

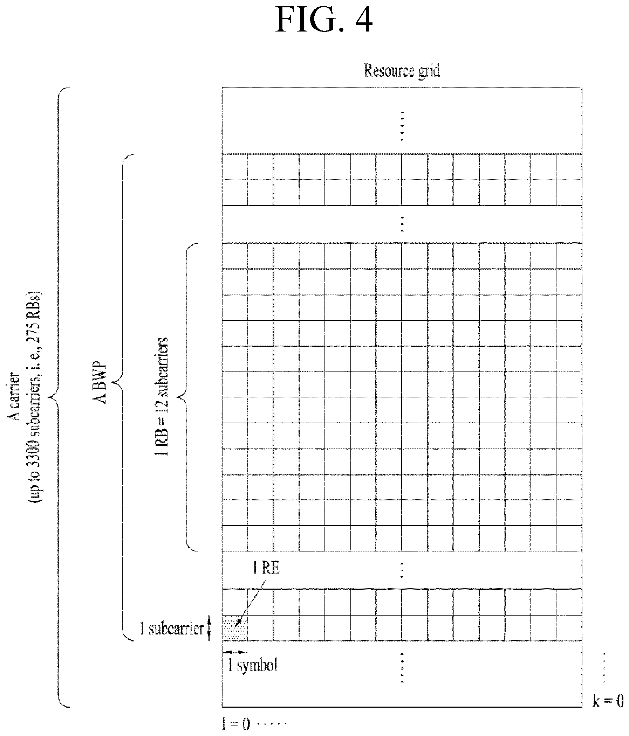

**FIG. 4** **illustrates a slot structure of an NR frame.**

A slot in the NR system includes a plurality of symbols in the time domain. For example, in the case of the normal CP, one slot includes seven symbols. On the other hand, in the case of the extended CP, one slot includes six symbols. A carrier includes a plurality of subcarriers in the frequency domain. A resource block (RB) is defined as a set of consecutive subcarriers (e.g., 12 consecutive subcarriers) in the frequency domain. A bandwidth part (BWP) is defined as a sequence of consecutive physical resource blocks (PRBs) in the frequency domain and may be associated with a specific numerology (e.g., SCS, CP length, etc.). A terminal may be configured with up to N (e.g., five) BWPs in each of downlink and uplink. Downlink or uplink transmission is performed through an activated BWP. Among the BWPs configured for the terminal, only one BWP may be activated at a given time. In the resource grid, each element is referred to as a resource element (RE), and one complex symbol may be mapped thereto.

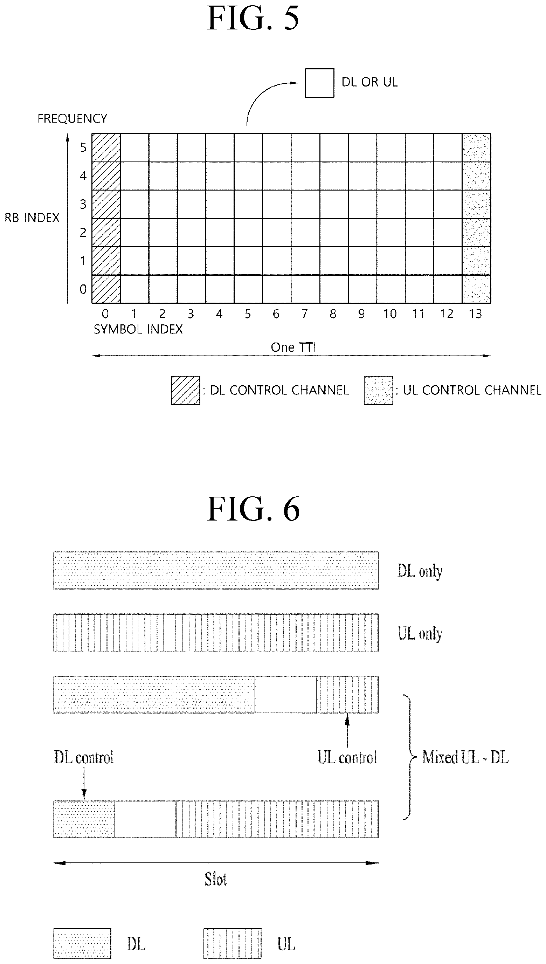

**FIG. 5** **shows an example of a subframe type in NR.**

In NR (or new RAT), a Transmission Time Interval (TTI), as shown in FIG. 5, may be referred to as a subframe or slot. The subframe (or slot) may be utilized in a TDD system to minimize data transmission delay. As shown in FIG. 5, a subframe (or slot) includes 14 symbols. The symbol at the head of the subframe (or slot) may be allocated for a DL control channel, and the symbol at the end of the subframe (or slot) may be assigned for a UL control channel. The remaining symbols may be used for either DL data transmission or UL data transmission. This subframe (or slot) structure allows sequential downlink and uplink transmissions in one single subframe (or slot). Accordingly, downlink data may be received in a subframe (or slot) and uplink ACK/NACK may be transmitted in the same subframe (or slot).

Such a subframe (or slot) structure may be referred to as a self-contained subframe (or slot).

The first N symbols in a slot may be used to transmit a DL control channel and referred to as a DL control region, hereinafter. The last M symbols in the slot may be used to transmit a UL control channel and referred to as a UL control region. N and M are integers greater than 0. A resource region between the DL control region and the UL control region may be used for either DL data transmission or UL data transmission and referred to as a data region. For example, a physical downlink control channel (PDCCH) may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region.

Using this subframe (or slot) structure reduces the time required for retransmitting data that has failed in reception, thereby minimizing overall data transmission latency. In such a self-contained subframe (or slot) structure, a time gap may be required for transitioning between a transmission mode and a reception mode or from the reception mode to the transmission mode. To accommodate this, a few OFDM symbols when switch from DL to UL in the subframe structure may be configured to a guard period (GP).

**FIG. 6** **illustrates a structure of a self-contained slot.**

In the NR system, the frames are structured as a self-contained structure, where one single slot includes a DL control channel, either a DL or UL data channel, and UL control channel. For example, the first N symbols in a slot may be used for transmitting a DL control channel and referred to as a DL control region. The last M symbols in the slot may be used for transmitting an UL control channel and referred to as a UL control region. N and M are integers greater than 0. A resource region between the DL control region and the UL control region may be used for either DL data transmission or UL data transmission and referred to as a data region.

For example, the following configurations may be taken into account. The durations are listed in temporal order.
1. DL only configuration
2. UL only configuration
3. Mixed UL-DL configuration
   - DL region + Guard Period (GP) + UL control region
   - DL control region + GP + UL region

DL region: (i) DL data region, (ii) DL control region + DL data region
UL region: (i) UL data region, (ii) UL data region + UL control region

A physical downlink control channel (PDCCH) may be transmitted in the DL control region, and a PDSCH may be transmitted in the DL data region. A physical uplink control channel (PUCCH) may be transmitted in the UL control region, and a PUSCH may be transmitted in the UL data region. Through the PDCCH, Downlink Control Information (DCI), for example, DL data scheduling information or UL data scheduling data may be transmitted. Through the PUCCH, Uplink Control Information (UCI), for example, ACK/NACK (Positive Acknowledgement/Negative Acknowledgement) information with respect to DL data, Channel State Information (CSI) information, or Scheduling Request (SR) may be transmitted. A guard period (GP) provides a time gap for a gNB and a terminal to switch between the transmission and reception modes. Part of symbols within a subframe that correspond to the transition from DL to UL may be configured as the GP.

The present disclosure aims to provide a transmission control method and apparatus for periodic uplink transmission in 3^{rd} Generation Partnership Project (3GPP) New Radio (NR). In particular, the present disclosure aims to provide a control method and apparatus for increasing utilization of transmission resources during configured grant (CG)-based transmission to increase the transmission capacity of an extended reality (XR) terminal.

3GPP NR defines CG-based transmission for uplink periodic transmission. The CG-based transmission for uplink periodic transmission is divided into two primary types: Type 1 and Type 2. In common, a transmission resource type, a modulation and coding scheme (MCS) table, a periodicity, a repetitive transmission setting, etc., are set through an RRC message/information called ConfiguredGrantConfig. For Type 1, information indicated through downlink control information (DCI), such as time and frequency resources, an MCS index, etc., is additionally set through the corresponding RRC message/information. Type 1 and Type 2 are divided based on the fact that whether transmission is actually performed in the set transmission area is transmitted back through DCI. In the case of Type 1, transmission is performed using preset time/frequency areas and MCS indexes even without transmission of activation DCI. In the case of Type 2, transmission is performed using activation DCI and time/frequency areas and MCS indexes set in the corresponding DCI, and without the corresponding DCI, transmission is not performed.

The above-described CG may be summarized as follows.
- Type 1: providing an uplink grant of a certain period by upper layer (radio resource control (RRC)) signaling (configured without separate first layer signaling).
- Type 2: setting a period of an uplink grant by upper layer (RRC) signaling, and providing the upper grant by activation/deactivation of a configured grant through PDCCH

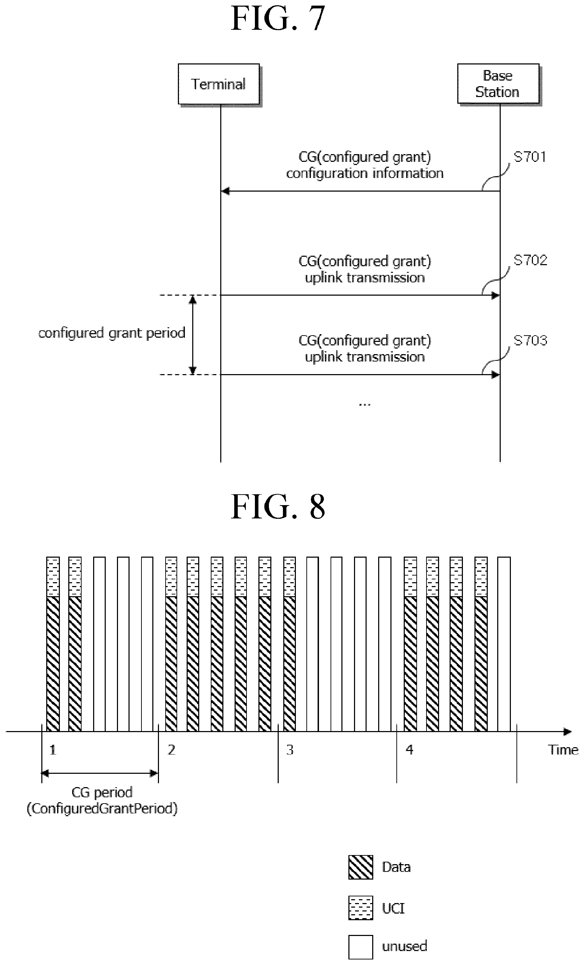

**FIG. 7** **illustrates exemplary uplink transmission and reception based on a configured grant (CG).**

Referring to FIG. 7, the base station transmits CG configuration information to the terminal through RRC signaling (S701). The CG configuration information transmitted from the base station to the terminal may include information about a period for performing uplink transmission using a CG. The terminal may periodically perform uplink transmission using the CG based on the information about the period included in the CG configuration information received from the base station (S702 and S703). Additionally, although not shown in FIG. 7, within the CG period, the CG uplink transmission may be repeatedly performed. The repeated transmission may be based on information about the number of repetitions included in the CG configuration information.

The CG-based uplink transmission may correspond to transmission of a CG transmission block. The transmission of the CG transmission block may be performed by multiplexing a control message capable of transmitting information about hybrid automatic repeat request (HARQ) ACK/NACK, CSI feedback report, and CG-UCI for downlink transmission in a CG-PUSCH area. In particular, the HARQ ACK/NACK may be allocated starting from the first symbol after the first consecutive DMRS transmission symbol and transmitted, the CG-UCI may be allocated starting from the first symbol after the first consecutive DMRS transmission symbol excluding the HARQ control message and transmitted, and the CSI control message may be allocated starting from the first symbol in the PUSCH area that does not transmit DMRS, excluding the HARQ control message and the CG-UCI control message, and transmitted. CG-UCI for a CG may transmit the following information.
- 4 bits of HARQ Process Number
- 2 bits of redundancy version (RV)
- 1 bit of new data indicator (NDI)
- For NR-U (unlicensed), predefined bits of channel occupancy time (COT) sharing information

Meanwhile, as an NR Release 18 work item, XR Enhancements for NR (NR_XR_Enh) to increase capacity according to the service traffic characteristics of XR terminals is scheduled to be completed by December 2023, and the work item has the objective shown in Table 5 below.

**[Table 5]**

| |
|---|
| 1 Specify the enhancements related to power saving: |
| - DRX support of XR frame rates corresponding to non-integer periodicities (through at least semi-static mechanisms e.g. RRC signalling) (RAN2) |
| 2. Specify the enhancements related to capacity: |
| - Multiple CG PUSCH transmission occasions in a period of a single CG PUSCH configuration (RAN1, RAN2); |
| - Dynamic indication of unused CG PUSCH occasion(s) based on UCI by the UE (RAN1); |
| - BSR enhancements including at least new BS Table(s); (RAN2); |
| - Delay reporting of buffered data in uplink; (RAN2); |
| - Provision of XR traffic assistance information for DL and UL (e.g. periodicity); (RAN2); |
| - Discard operation of PDU Sets (RAN2); |
| 3. Specify the enhancements for XR Awareness (RAN2, RAN3): TBD (detailed objectives will be further clarified at RAN#99 based on the conclusions of TR38.835, and work to be started only after RAN#99) |

The existing NR CG may specify only one transmission block within a period and perform configuration by predefining a short period and large transmission area when the average data amount within the period is large, and a long period and small transmission area when the average data amount within the period is small. In addition, the existing NR CG operates by performing additional repetitive transmissions a predefined number of times according to the uplink channel environment. However, since it is difficult to cope with a variable average transmission area such as XR's video stream, a method for one CG to secure multiple PUSCH transmissions has been proposed (in objective 2 of Table 5, "Multiple CG PUSCH transmission occasions in a period of a single CG PUSCH configuration (RAN1, RAN2); ").

However, it is still difficult with dynamic reallocation when a pre-allocated area does not need to be used. To this end, a method of a terminal transferring an area that has not been used for actual transmission among pre-allocated areas such that the area is utilized for other transmissions has been proposed (in objective 2 of Table 5, "Dynamic indication of unused CG PUSCH occasion(s) based on UCI by the UE (RAN1); ").

In this regard, several options have been discussed at the standardization meeting, but specific details (e.g. a transmission method, a format, etc.) have not yet been specified.

Therefore, the present disclosure aims to provide a method of configuring UCI for transmitting PUSCH which a terminal has not used when multiple CG PUSCH transmissions for CG-based transmission are set in an NR uplink transmission environment. In particular, the present disclosure introduces a pre-configuring method for a resource area for the corresponding UCI and an indication of the resource area.

**FIG. 8** **is a diagram for describing uplink transmission and reception based on a CG according to an embodiment of the disclosure.**

Referring to FIG. 8, uplink transmission (e.g., CG-PUSCH transmission) is performed based on a CG period (ConfiguredGrantPeriod). Here, UCI (e.g., CG-UCI) may be transmitted by being multiplexed or piggybacked on resources (or grants) for CG-PUSCH transmission. FIG. 8 illustrates five transmission occasions within one CG period. There may be occasions not used for transmission (e.g., unused transmission occasions) among the five transmission occasions. For example, in FIG. 8, there are three unused transmission occasions within the first CG period, no unused transmission occasions within the second CG period, four unused transmission occasions within the third CG period, and one unused transmission occasion within the fourth CG period.

In the disclosure, uplink control information (UCI) is used to indicate such unused transmission occasions. Such UCI indicating an unused transmission occasion may be referred to as configured grant-unused occasion-uplink control information (CG-UO-UCI). However, the embodiments are not limited threto. This name may be replaced with another name with the same technical meaning. Additionally, in the present disclosure, "transmission occasion (TO)" described above may be used synonymously with "occasion."

Meanwhile, CG period information and information about the number of transmission occasions within the CG period may be included in CG configuration information transmitted from the base station to the terminal. Here, the CG configuration information may be transmitted to the terminal through an RRC message/information. Although not shown in FIG. 8, each transmission occasion within one CG period may be repeatedly transmitted (e.g., performed), and the repeated transmission may be based on information about the number of repetitions. The information about the number of repetitions may also be included in the above-described CG configuration information transmitted from the base station to the terminal.

Hereinafter, embodiments of the present disclosure will be described in detail.

The embodiments of the present disclosure may include a method of configuring new UCI transmission resources, a method of configuring transmission resources when including the existing CG-UCI, and a method of configuring additional transmission areas for new UCI.

### First embodiment: a method of configuring new UCI transmission resource

Upon introduction of a new UCI format for transmitting UCI (e.g., CG-UO-UCI) for indicating an unused transmission occasion, the present disclosure provide a method for configuring a transmission resource for the new UCI format according to an embodiment. The method may include a method of configuring (e.g., determining) whether to transmit new UCI and a method of determining a specific resource location for transmission. However, the first embodiment including ① a method of configuring whether to transmit new UCI and ② a method of configuring a new UCI content format may be equally applied when the corresponding CG-UO-UCI is included in the existing CG-UCI and transmitted (e.g., second embodiment) and when an additional transmission area for CG-UO-UCI transmission is configured (e.g., third embodiment).
① A method of configuring (e.g., determining) whether to transmit new UCI: This is a method of determining whether UCI (e.g., CG-UO-UCI) for indicating an unused transmission occasion is to be transmitted on a specific CG PUSCH.

As described above, when one CG PUSCH configuration by the base station includes multiple PUSCH transmission occasions within one period, the base station may be allowed to implicitly or explicitly configure whether to include UCI (e.g., CG-UO-UCI) for indicating unused PUSCH transmission occasion (s). As an implicit configuration method, whether to include the UCI may be determined according to the number of PUSCH transmission occasions included in one period, the gap between the PUSCH transmission occasions, whether repetition is set, the repetition setting count, or the like. As an explicit setting method, whether to include the UCI, that is, CG-UO-UCI, may be configured and/or indicated when configuring the CG PUSCH, or when activating through DCI in the case of CG type 2.

Hereinafter, the first embodiment will be described in more detail.

First, whether to transmit CG-UO-UCI may be determined differently according to the CG period and the number of PUSCH occasions within one period. For example, CG-UO-UCI may be transmitted only when the number of PUSCH occasions is greater than 1, 2, or a specific value set through RRC. Additionally, CG-UO-UCI may be transmitted only when the interval between PUSCH occasions is greater than a specific number of symbols or slots. Alternatively, whether to transmit CG-UO-UCI may be determined depending on the number of repetitions preset in the CG configuration (e.g., ConfiguredGrantConfig).

In particular, whether to transmit CG-UO-UCI may vary depending on the utilization of the previous occasion. For example, when all PUSCH occasions have been used in the previous period, CG-UO-UCI may be allocated only to the first PUSCH occasion, and otherwise, CG-UO-UCI may be allocated to all PUSCH occasions. Alternatively, only when CG-UO-UCI transmitted in the first PUSCH occasion is configured to use all PUSCH occasions, CG-UO-UCI may or may not be transmitted in the subsequent PUSCH occasions.

The criteria for determining whether to transmit CG-UO-UCI may be preset through RRC. For example, whether to transmit UCI differently depending on the utilization of occasions may be preset through RRC. This may be set as a new RRC parameter or may be implicitly set as an MCS table/index or an allocation size of a frequency domain, a position of a DMRS symbol, etc. For example, when multiple PUSCH occasions are set and a DMRS symbol is not assigned to the first symbol to be transmitted, CG-UO-UCI may be configured to be transmitted.

Whether to transmit CG-UO-UCI may be determined depending on whether the corresponding CG-PUSCH includes another UCI, that is, HARQ or CSI. For example, CG-UO-UCI may be configured to be transmitted only when CG-PUSCH does not include HARQ, CSI or either of the above two control messages/information.

In the case of Type 2, whether to transmit CG-UO-UCI may be determined by scheduling DCI that performs activation. In particular, the DCI may indicate a transmission location and a transmission frequency. For example, the DCI may indicate whether to not transmit the corresponding UCI, whether to transmit the corresponding UCI only on the first occasion, or whether to transmit the corresponding UCI on all occasions.

Whether to transmit the corresponding UCI may be determined according to the priority of the PUSCH. For example, when the priority of the PUSCH is a specific value such as 0 or 1, the CG PUSCH configuration may not include CG-UO-UCI.

When repetition is used in CG, the corresponding UCI may be transmitted only at a specific repetition position among multiple repetition allocation slots. For example, the corresponding UCI may be transmitted only in the first repetition position/slot. In this case, only the corresponding UCI transmission block may be repeatedly transmitted in the corresponding slot.

② A method of configuring a new UCI content format:
As a specific method of configuring CG-UO-UCI information for indicating an unused PUSCH TO, one or more methods and CG-UO-UCI formats/types corresponding thereto may be defined. In this case, with respect to a certain CG-PUSCH configuration, the CG-UO-UCI format/type may be configured to be defined by the base station. In this case, as an example of a method of configuring CG-UO-UCI information, CG-UO-UCI may convey whether all occasions are unused in the form of a bitmap, or in the form of an unused range with a start position and a length, such as a start and length indicator value (SLIV) or may convey whether all occasions are unused after reception of the UCI. However, the embodiment may be applied although multiple CG-UO-UCI formats/types are defined, regardless of a specific CG-UO-UCI information configuration method.

CG-UO-UCI transmission format/type-related configuration information is to be applied when configuring a multiple CG-PUSCH having multiple occasions within one period. The base station may allow the CG-UO-UCI transmission format/type-related configuration information to be included in UE-specific or cell-specific RRC signaling. The CG-UO-UCI transmission format/type-related configuration information included in UE specific or cell-specific RRC signaling is transmitted to the terminal. Alternatively, the CG-UO-UCI transmission format/type may be determined according to the number of occasions within the period, the number of repetitions, or the length of the period. For example, between the number of bits represented in a bitmap format and the number of bits represented in a SLIV format, when the number of bits of the former is shorter or the same, a bitmap representation may be determined. Alternatively, the CG-UO-UCI transmission format/type may be determined according to the frequency allocation value. For example, when a region greater than a certain resource block (RB) is allocated, the CG-UO-UCI may be transmitted in a bitmap format. Otherwise, the CG-UO-UCI may be transmitted in a SLIV format.

To determine the bitmap length, two methods may be used. The first method uses as many bits as the total number of occasions, and the second a method uses as many bits as the number of occasions following an occasion on which CG-UO-UCI is transmitted. Similarly, when transmitting in an SLIV format, two methods may be used as follow. The first method uses as many bits as the total number of occasions, and the second method uses as many bits as the number of occasions following an occasion on which CG-UO-UCI is transmitted. One of the methods may be selected and operated depending on the situation. For example, in case of New Radio-unlicensed (NR-U), as many bits as the total occasions may be used. Otherwise, as many bits as the number of the remaining occasions may be used. In addition, when using as many bits as the remaining occasions, the following methods may be used. First, the size of the message field itself may be reduced. Second, the field size may be maintained and padded with 0 afterward. Further, the position may be fixed and padded with 0 for content corresponding to a previously transmitted part. Moreover, the same content may be transmitted repeatedly.

### Second embodiment: a method of determining transmission resource when including existing CG-UCI

As a second embodiment, the disclosure introduces a method of transmitting CG-UO-UCI transmission message/information by including it in the existing CG-UCI. To facilitate this, an area used for COT sharing information in NR-U may be utilized. In particular, when multiple occasions are used in NR-U, the base station has difficulties in distinguishing the reasons of unused occasions, such as whether the occasion is unused due to no traffic or because to the channel is occupied. Therefore, in the corresponding environment, CG-UO-UCI is not transmitted, and a COT-related field in the existing CG-UCI is used for its original purpose. The field is used to transmit CG-UO-UCI related information only in scenarios other than NR-U. For example, only when multiple occasions are configured without "cg-COT-SharingList" configured in CG configuration information (ConfiguredGrantConfig) transmitted from the base station to the terminal, CG-UO-UCI information may be included in CG-UCI.

### Third embodiment: a method of configuring an additional transmission area for new UCI

As the third embodiment, the disclosure introduces a method of additionally configuring a transmission area to indicate no data to be transmitted, when there is no data to be transmitted by the terminal in a specific CG period, that is, when there is no transmission block to be allocated to CG-PUSCH,. An area for the existing SR or periodic CSI feedback transmission may be used,. For this, a separate signal may be used for the transmission. For example, the signal may be part of a sequence used for HARQ feedback. Additionally, the signal may nidicate that no occasions will be used in the subsequent/next first CG period. This may be a specific CG specified when delivered in a previously indicated area through an RRC that delivers CG-related configurations, such as CG configuration information (ConfiguredGrantConfig). For example, when a corresponding transmission space (e.g., region, area) is defined in the entire CG configuration information (ConfiguredGrantConfig), and if UCI of a predefined type or UCI of a type indicated by a corresponding RRC exists in the corresponding transmission space (e.g., region, area), all occasions in the period following the UCI may be indicated as unused. Alternatively, the indication may apply to the entirety of the multiple CGs configured for the UE. In this case, the duration for which the indication of unused is valid may be defined, and the duration may be set in the form of a time or the number of periods through RRC, or may be set as a preset value, etc. For example, the indication may be valid for a CG PUSCH occasion within a frame in which the corresponding UCI is transmitted, or the next frame, or for an occasion within the period of all CGs that include the PUSCH transmission occasion within the corresponding frame.

The methods according to the embodiments described above may be applied independently or in combination. In addition, , new terms may be used in the disclosure. However, the embodiments are not limited thereto. New terms used in the disclosure may be arbitrary names that are easily understandable, and the content of the disclosure may be still applied even if other names with the equivalent meanings are used in practice.

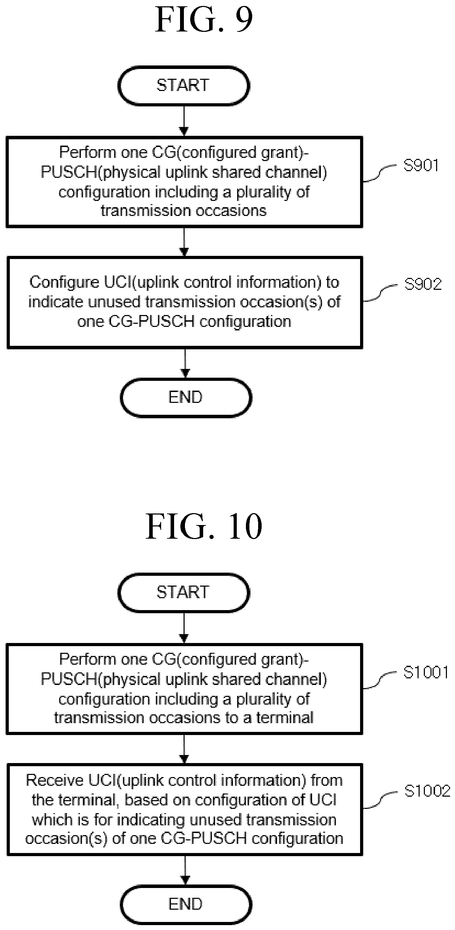

**FIG. 9** **is a flowchart for an operation method of a terminal according to an embodiment of the disclosure.**

Referring to FIG. 9, a terminal performs one CG-PUSCH configuration including multiple transmission occasions (S901). The terminal may perform the one CG-PUSCH configuration based on configuration information from the base station. The configuration information from the base station may be CG configuration information (ConfiguredGrantConfig). Here, the multiple transmission occasions may be configured to be included within one period.

Additionally, the terminal configures UCI for indicating an unused transmission occasion of the one CG-PUSCH configuration (S902). The configuring of the UCI for indicating an unused transmission occasion may be performed i) regarding whether to include the UCI in at least one of the multiple transmission occasions of the one CG-PUSCH configuration or ii) based on an indication from the base station. The indication from the base station may be received through RRC signaling.

Then, the terminal may transmit the UCI for indicating an unused transmission occasion of CG-PUSCH to the base station.

Meanwhile, the UCI for indicating the unused transmission occasion may include bitmap information, and the unused transmission occasion and the used transmission occasion may be indicated through the bitmap information. The size of the bitmap information may correspond to transmission occasions including the unused transmission occasion and a used transmission occasion. In addition, the transmission occasions including the unused transmission occasion and the used transmission occasion may constitute the multiple transmission occasions included in the one CG-PUSCH configuration.

**FIG. 10** **is a flowchart for an operation method of a base station according to an embodiment of the disclosure.**

Referring to FIG. 10, a base station performs one CG-PUSCH configuration including multiple transmission occasions on a terminal (S1001). The one CG-PUSCH configuration performed on the terminal by the base station may be performed based on configuration information transmitted from the base station. The configuration information from the base station may be CG configuration information ConfiguredGrantConfig. Here, the multiple transmission occasions may be configured to be included within one period

Then, the base station may receive the UCI from the terminal based on a configuration of uplink control information (UCI) for indicating an unused transmission occasion of the one CG-PUSCH configuration(S1002). Here, the UCI for indicating the unused transmission occasion may be configured i) regarding whether to include the UCI in at least one of the multiple transmission occasions of the one CG-PUSCH configuration or ii) based on an indication from the base station. The indication from the base station may be transmitted through radio resource control (RRC) signaling.

Meanwhile, the UCI for indicating the unused transmission occasion may include bitmap information, and the unused transmission occasion and the used transmission occasion may be indicated through the bitmap information. The size of the bitmap information may correspond to transmission occasions including the unused transmission occasion and the used transmission occasion. In addition, the transmission occasions including the unused transmission occasion and the used transmission occasion may constitute the multiple transmission occasions included in the one CG-PUSCH configuration.

The embodiments now may be implemented through various means. For example, the embodiments may be implemented using hardware, firmware, software, or a combination thereof. Details will be described with reference to the accompanying drawings.

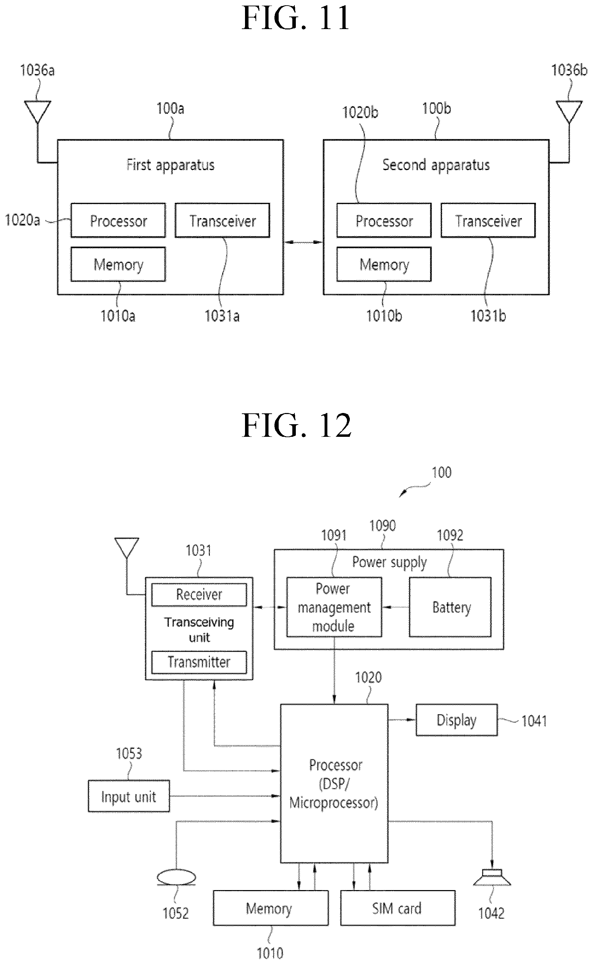

**FIG. 11** **is a block diagram illustrating apparatuses according to an embodiment of the disclosure.**

Referring to FIG. 11, a wireless communication system may include a first apparatus 100a and a second apparatus 100b.

The first apparatus 100a may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medical apparatus, a finance technology (FinTech) apparatus (or a financial apparatus), a security apparatus, a climate/environment apparatus, an apparatus related to a 5G service, or other apparatuses related to the fourth industrial revolution.

The second apparatus 100b may include a base station, a network node, a transmission terminal, a reception terminal, a wireless apparatus, a radio communication device, a vehicle, a vehicle with an autonomous driving function, a connected car, an unmanned aerial vehicle (UAV), an artificial intelligence (AI) module, a robot, an augmented reality (AR) apparatus, a virtual reality (VR) apparatus, a mixed reality (MR) apparatus, a hologram apparatus, a public safety apparatus, a machine-type communication (MTC) apparatus, an Internet of things (IoT) apparatus, a medial apparatus, a finance technology (FinTech) apparatus (or a financial apparatus), a security apparatus, a climate/environment apparatus, an apparatus related to a 5G service, or other apparatuses related to the fourth industrial revolution.

The first apparatus 100a may include at least one processor such as a processor 1020a, at least one memory such as a memory 1010a, and at least one transceiver such as a transceiver 1031a. The processor 1020a may be tasked with executing the previously mentioned functions, procedures, and/or methods. The processor 1020a may be capable of implementing one or more protocols. For example, the processor 1020a may perform and manage one or more layers of a radio interface protocol. The memory 1010a may be connected to the processor 1020a, and configured to store various types of information and/or instructions. The transceiver 1031a may be connected to the processor 1020a, and controlled to transceive radio signals.

The second apparatus 100b may include at least one processor such as a processor 1020b, at least one memory device such as a memory 1010b, and at least one transceiver such as a transceiver 1031b. The processor 1020b may be tasked with executing the previously mentioned functions, procedures, and/or methods. The processor 1020b may be capable of implementing one or more protocols. For example, the processor 1020b may manage one or more layers of a radio interface protocol. The memory 1010b may be connected to the processor 1020b and configured to store various types of information and/or instructions. The transceiver 1031b may be connected to the processor 1020b and controlled to transceive radio signaling.

The memory 1010a and/or the memory 1010b may be respectively connected inside or outside the processor 1020a and/or the processor 1020b and connected to other processors through various technologies such as wired or wireless connection.

The first apparatus 100a and/or the second apparatus 100b may have one or more antennas. For example, an antenna 1036a and/or an antenna 1036b may be configured to transceive a radio signal.

**FIG. 12** is a **block diagram showing a terminal according to an embodiment of the disclosure.**

In particular, FIG. 12 illustrates the previously described apparatus of FIG. 11 in more detail.

The apparatus includes a memory 1010, a processor 1020, a transceiving unit 1031 (e.g., transceiving circuit), a power management module 1091 (e.g., power management circuit), a battery 1092, a display 1041, an input unit 1053 (e.g., input circuit), a loudspeaker 1042, a microphone 1052, a subscriber identification module (SIM) card, and one or more antennas. Some of constituent elements is referred to as a unit in the disclosure. However, the embodiments are not limited thereto. For example, such term "unit" is also referred to as a circuit block, a circuit, or a circuit module.

The processor 1020 may be configured to implement the proposed functions, procedures, and/or methods described in the disclosure. The layers of the radio interface protocol may be implemented in the processor 1020. The processor 1020 may include an application-specific integrated circuit (ASIC), other chipsets, logic circuits, and/or data processing devices. The processor 1020 may be an application processor (AP). The processor 1020 may include at least one of a digital signal processor (DSP), a central processing unit (CPU), a graphics processing unit (GPU), and a modulator and demodulator (MODEM). For example, the processor 1020 may be SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®}, KIRIN^{™} series of processors made by HiSilicon^{®}, or the corresponding next-generation processors.

The power management module 1091 manages a power for the processor 1020 and/or the transceiver 1031. The battery 1092 supplies power to the power management module 1091. The display 1041 outputs the result processed by the processor 1020. The input unit 1053 may be an individual circuit that receives an input from a user or other devices and convey the received input with associated information to the processor 1020. However, the embodiments are not limited thereto. For example, the input unit 1053 may be implemented as at least one of touch keys or buttons to be displayed on the display 1041 when the display 1041 is capable of sensing touches, generating related signals according to the sensed touches, and transferring the signals to the processor 1020. The SIM card is an integrated circuit used to securely store international mobile subscriber identity (IMSI) used for identifying a subscriber in a mobile telephoning apparatus such as a mobile phone and a computer and the related key. Many types of contact address information may be stored in the SIM card.

The memory 1010 is coupled with the processor 1020 in a way to operate and stores various types of information to operate the processor 1020. The memory may include read-only memory (ROM), random access memory (RAM), flash memory, a memory card, a storage medium, and/or other storage device. The embodiments described in the disclosure may be implemented as software program or application. In this case, such software program or application may be stored in the memory 1010. In response to a predetermined event, the software program or application stored in the memory 1010 may be fetched and executed by the processor 1020 for performing the function and the method described in this disclosure. The memory may be implemented inside of the processor 1020. Alternatively, the memory 1010 may be implemented outside of the processor 1020 and may be connected to the processor 1020 in communicative connection through various means which is well-known in the art.

The transceiver 1031 is connected to the processor 1020, receives, and transmits a radio signal under control of the processor 1020. The transceiver 1031 includes a transmitter and a receiver. The transceiver 1031 may include a baseband circuit to process a radio frequency signal. The transceiver controls one or more antennas to transmit and/or receive a radio signal. In order to initiate a communication, the processor 1020 transfers command information to the transceiver 1031 to transmit a radio signal that configures a voice communication data. The antenna functions to transmit and receive a radio signal. When receiving a radio signal, the transceiver 1031 may transfer a signal to be processed by the processor 1020 and transform a signal in baseband. The processed signal may be transformed into audible or readable information output through the speaker 1042.

The speaker 1042 outputs a sound related result processed by the processor 1020. The microphone 1052 receives audio input to be used by the processor 1020.

A user inputs command information like a phone number by pushing (or touching) a button of the input unit 1053 or a voice activation using the microphone 1052. The processor 1020 processes to perform a proper function such as receiving the command information, calling a call number, and the like. An operational data on driving may be extracted from the SIM card or the memory 1010. Furthermore, the processor 1020 may display the command information or driving information on the display 1041 for a user's recognition or for convenience.

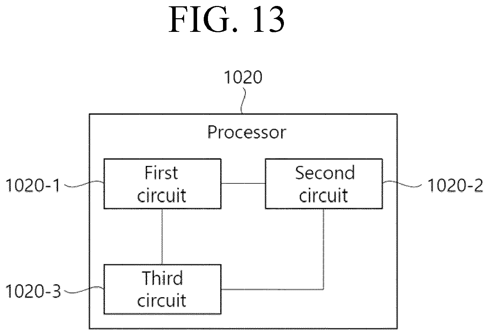

**FIG. 13** **is a block diagram of a processor in accordance with an embodiment.**

Referring to FIG. 13, a processor may include a plurality of circuitry to implement the proposed functions, procedures and/or methods described herein. For example, the processor 1020 may include a first circuit 1020-1, a second circuit 1020-2, and a third circuit 1020-3. Also, although not shown, the processor 1020 may include more circuits. Each circuit may include a plurality of transistors.

The processor 1020 may be referred to as an application-specific integrated circuit (ASIC) or an application processor (AP) and may include at least one of a digital signal processor (DSP), a central processing unit (CPU), and a graphics processing unit (GPU).

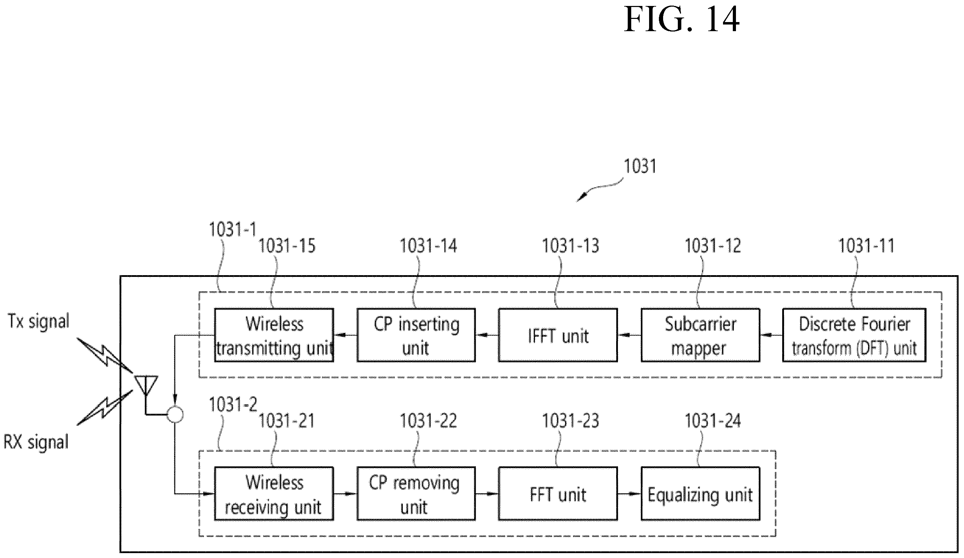

**FIG. 14** **is a detailed block diagram of a transceiver of a first apparatus shown in** **FIG. 11** **or a transceiving unit of an apparatus shown in** **FIG. 12****.**

Referring to FIG. 14, the transceiving unit 1031 (e.g., transceiving circuit) includes a transmitter 1031-1 and a receiver 1031-2. The transmitter 1031-1 includes a discrete Fourier transform (DFT) unit 1031-11 (e.g., DFT circuit), a subcarrier mapper 1031-12 (e.g., subcarrier mapping circuit), an IFFT unit 1031-13 (e.g., IFFT circuit), a cyclic prefix (CP) insertion unit 1031-14 (e.g., CP insertion circuit), and a wireless transmitting unit 1031-15 (e.g., wireless transmitting circuit). The transmitter 1031-1 may further include a modulator. Further, the transmitter 1031-1 may for example include a scramble unit (e.g., scrambling circuit), a modulation mapper, a layer mapper, and a layer permutator, which may be disposed before the DFT unit 1031-11. That is, to prevent a peak-to-average power ratio (PAPR) from increasing, the transmitter 1031-1 subjects information to the DFT unit 1031-11 before mapping a signal to a subcarrier. The signal spread (or pre-coded) by the DFT unit 1031-11 is mapped onto a subcarrier by the subcarrier mapper 1031-12 and made into a signal on the time axis through the IFFT unit 1031-13. Some of constituent elements is referred to as a unit in the disclosure. However, the embodiments are not limited thereto. For example, such term "unit" is also referred to as a circuit block, a circuit, or a circuit module.

The DFT unit 1031-11 performs DFT on input symbols to output complex-valued symbols. For example, when Ntx symbols are input (here, Ntx is a natural number), DFT has a size of Ntx. The DFT unit 1031-11 may be referred to as a transform precoder. The subcarrier mapper 1031-12 maps the complex-valued symbols onto respective subcarriers in the frequency domain. The complex-valued symbols may be mapped onto resource elements corresponding to resource blocks allocated for data transmission. The subcarrier mapper 1031-12 may be referred to as a resource element mapper. The IFFT unit 1031-13 performs IFFT on the input symbols to output a baseband signal for data as a signal in the time domain. The CP inserting unit 1031-14 copies latter part of the baseband signal for data and inserts the latter part in front of the baseband signal for data. CP insertion prevents inter-symbol interference (ISI) and inter-carrier interference (ICI), thereby maintaining orthogonality even in a multipath channel.

On the other hand, the receiver 1031-2 includes a wireless receiving unit 1031-21 (e.g., wireless receiving circuit), a CP removing unit 1031-22 (e.g., CP removing circuit), an FFT unit 1031-23 (e.g., FFT circuit), and an equalizing unit 1031-24 (e.g., equalizing circuit). The wireless receiving unit 1031-21, the CP removing unit 1031-22, and the FFT unit 1031-23 of the receiver 1031-2 perform reverse functions of the wireless transmitting unit 1031-15, the CP inserting unit 1031-14, and the IFFT unit 1031-13 of the transmitter 1031-1. The receiver 1031-2 may further include a demodulator.

According to the embodiments of the disclosure, when multiple CG-PUSCH transmissions are configured in a wireless communication system, that is, when multiple transmission occasions are configured, uplink resources can be efficiently managed.

Although the preferred embodiments of the disclosure have been illustratively described, the scope of the disclosure is not limited to only the specific embodiments, and the disclosure can be modified, changed, or improved in various forms within the spirit of the disclosure and within a category written in the claim.

In the above exemplary systems, although the methods have been described in the form of a series of steps or blocks, the disclosure is not limited to the sequence of the steps, and some of the steps may be performed in different order from other or may be performed simultaneously with other steps. Further, those skilled in the art will understand that the steps shown in the flowcharts are not exclusive and may include other steps or one or more steps of the flowcharts may be deleted without affecting the scope of the disclosure.

Claims of the present disclosure may be combined in various manners. For example, technical features of the method claim of the present disclosure may be combined to implement a device, and technical features of the device claim of the present disclosure may be combined to implement a method. In addition, the technical features of the method claim and the technical features of the device claim of the present disclosure may be combined to implement a device, and technical features of the method claim and the technical features of the device claim of the present disclosure may be combined to implement a method.

## Claims

1. A method of a terminal for operating in a wireless communication system, the method comprising:
performing one configured grant (CG) - physical uplink shared channel (PUSCH) configuration including multiple transmission occasions; and
configuring uplink control information (UCI) for indicating an unused transmission occasion of the one CG-PUSCH configuration,
wherein the configuring of the UCI for indicating the unused transmission occasion includes configuring the UCI regarding whether to include the UCI in at least one of the multiple transmission occasions of the one CG-PUSCH configuration and based on an indication from a base station.

2. The method of claim 1, wherein the multiple transmission occasions are included in one period.

3. The method of claim 1 or 2, wherein the indication is received through radio resource control (RRC) signaling from the base station.

4. The method of any one of claims 1 to 3, wherein the UCI for indicating the unused transmission occasion includes bitmap information.

5. The method of claim 4, wherein the unused transmission occasion and a used transmission occasion are indicated through the bitmap information, and a size of the bitmap information corresponds to transmission occasions including the unused transmission occasion and the used transmission occasion.

6. The method of claim 5, wherein the transmission occasions including the unused transmission occasion and the used transmission occasion constitute the multiple transmission occasions included in the one CG-PUSCH configuration.

7. A method of a base station for operating in a wireless communication system, the method comprising:
performing one configured grant (CG)-physical uplink shared channel (PUSCH) configuration including multiple transmission occasions to a terminal; and
receiving uplink control information (UCI) indicating an unused transmission occasion of the one CG-PUSCH configuration from the terminal,
wherein the UCI for indicating the unused transmission occasion is configured by the terminal regarding whether to include the UCI in at least one of the multiple transmission occasions of the one CG-PUSCH configuration and based on an indication from the base station.

8. The method of claim 7, wherein the multiple transmission occasions are included in one period.

9. The method of claim 7 or 8, wherein the indication is transmitted through radio resource control (RRC) signaling from the base station.

10. The method of any one of claims 7 to 9, wherein the UCI for indicating the unused transmission occasion includes bitmap information.

11. The method of claim 10, wherein the unused transmission occasion and a used transmission occasion are indicated through the bitmap information, and a size of the bitmap information corresponds to transmission occasions including the unused transmission occasion and the used transmission occasion.

12. The method of claim 11, wherein the transmission occasions including the unused transmission occasion and the used transmission occasion constitute the multiple transmission occasions included in the one CG-PUSCH configuration.

13. A communication device for a wireless communication system, comprising:
at least one processor; and
at least one memory storing instructions and operably and electrically connected to the at least one processor,
wherein the instructions that, when executed by the at least one processor, cause the communication device to perform operations of:
performing one configured grant (CG)-physical uplink shared channel (PUSCH) configuration including multiple transmission occasions; and
configuring uplink control information (UCI) for indicating an unused transmission occasion of the one CG-PUSCH configuration,
wherein the UCI for indicating the unused transmission occasion is configured regarding whether to include the UCI in at least one of the multiple transmission occasions of the one CG-PUSCH configuration and based on an indication from a base station.

14. The communication device of claim 13, wherein the multiple transmission occasions are included in one period.

15. The communication device of claim 13 or 14, wherein the indication is received through radio resource control (RRC) signaling from the base station.
